# EUROPEAN PATENT APPLICATION

(11) **EP 4 296 867 A1**
(43) Date of publication of application: **27.12.2023**
(21) Application number: 22794606.8
(22) Date of filing: 14.04.2022
(51) Int. Cl.: G06F 16/44, H04N 21/454

(54) **METHOD, APPARATUS, AND DEVICE FOR DISPLAYING MULTI-MEDIA CONTENT, AND STORAGE MEDIUM**

(30) Priority: 26.04.2021 CN 202110451943
(71) Applicant: BEIJING YOUZHUJU NETWORK TECHNOLOGY CO. LTD., Beijing 101299 (CN)
(72) Inventor: CAO, Tianyu, Beijing 100190 (CN)
(74) Representative: Dentons UK and Middle East LLP
(86) International application number: PCT/CN2022/086737
(87) International publication number: WO 2022/228135

(57) **Abstract**

A method, apparatus, and device for displaying multi-media content, and a storage medium. The method comprises: first, displaying a popup window for a specific display mode (S101), at least one content classification control being displayed on the popup window for the specific display mode, and the content classification control having a correspondence with a multi-media content classification; then, in response to a trigger operation for a target content classification control among the at least one content classification control, starting up a specific display mode, and displaying, in the specific display mode, the multi-media content classification corresponding to the target content classification control (S102). In said method, a content classification control for a multi-media content classification is displayed on a popup window for a specific display mode so that a user can express interest in multi-media content in the specific display mode, and the user is guided to start up the specific display mode, thus increasing the utilization rate of the specific display mode.

## Description

The present application claims priority to Chinese Patent Application No. 202110451943.6, titled "METHOD, APPARATUS, AND DEVICE FOR DISPLAYING MULTI-MEDIA CONTENT, AND STORAGE MEDIUM", filed on April 26, 2021 with the National Intellectual Property Administration, PRC, which is incorporated herein by reference in its entirety.

### FIELD

The present disclosure relates to the technical field of data processing, and in particular to a method and apparatus for displaying a multimedia content, a device, and a storage medium.

### BACKGROUND

At present, when multimedia content software such as short video software is started, a user is usually prompted in the form of a pop-up window to select a specified display mode. If the user selects a specified display mode, multimedia content browsed in a certain mode will be displayed to the user in the specified display mode.

However, the usage rate of the specified display mode in current multimedia content software is low. Therefore, a technical problem to be solved urgently is how to increase the usage rate of the specified display mode.

### SUMMARY

In order to solve or at least partly solve the above technical problems, a method and apparatus for displaying a multimedia content, a system, a device, and a storage medium are provided according to the present disclosure. By displaying a content classification control for a multimedia content classification on a specified display mode pop-up window, the user may be interested in the multimedia content in a specified display mode, so that the user is guided to enable the specified display mode, improving the usage rate of the specified display mode.

In a first aspect, a method for displaying a multimedia content is provided according to the present disclosure provides. The method includes:
displaying a specified display mode pop-up window, where at least one content classification control is displayed on the specified display mode pop-up window, and the content classification control has a correspondence with a multimedia content classification; and
enabling a specified display mode in response to a trigger operation for a target content classification control in the at least one content classification control, and displaying a multimedia content classification corresponding to the target content classification control in the specified display mode.

In an embodiment, the method further includes: playing a multimedia content belonging to the multimedia content classification, in response to a trigger operation of switching from a current page to a preset multimedia content display page.

In an embodiment, before the displaying the specified display mode pop-up window, the method further includes: obtaining pop-up window display information in response to a login operation for a target application, where the pop-up window display information includes a content classification control corresponding to a currently logged-in user.

The displaying the specified display mode pop-up window includes: displaying the specified display mode pop-up window based on the pop-up window display information.

In an embodiment, the pop-up window display information includes a content classification control determined based on historical behavior data of the currently logged-in user.

In an embodiment, a classification icon and a classification theme of the multimedia content classification corresponding to the content classification control are displayed on the content classification control.

In an embodiment, the method further includes: displaying the at least one content classification control in a slidable manner, in response to a preset sliding operation for the at least one content classification control on the specified display mode pop-up window.

In a second aspect, an apparatus for displaying a multimedia content is provided according to the present disclosure. The apparatus includes:
a display module configured to display a specified display mode pop-up window; where at least one content classification control is displayed on the specified display mode pop-up window, and the content classification control has a correspondence with a multimedia content classification;
an enabling module configured to enable a specified display mode in response to a trigger operation for a target content classification control in the at least one content classification control; and
a presentation module configured to display a multimedia content classification corresponding to the target content classification control in the specified display mode.

In a third aspect, a computer-readable storage medium is provided according to the present disclosure, where instructions are stored on the computer-readable storage medium; and the instructions, when executed on a terminal device, cause the terminal device to perform the above method.

In a fourth aspect, a device is provided according to the present disclosure, which includes: a memory, a processor, and a computer program stored on the memory and operable on the processor, where the processor, when executing the computer program, performs the above method.

In a fifth aspect, a computer program product is provided according to the present disclosure, where the computer program product includes a computer program/instruction; and the computer program/instruction, when executed by a processor, performs the above method.

Compared with the conventional technology, the technical solutions according to the embodiments of the present disclosure have the following advantages.

A method for displaying a multimedia content is provided according to the embodiments of the present disclosure. First, a specified display mode pop-up window is displayed, where at least one content classification control is displayed on the specified display mode pop-up window, and the content classification control has a correspondence with a multimedia content classification. Then, in response to a trigger operation for a target content classification control in the at least one content classification control, a specified display mode is enabled, and a multimedia content classification corresponding to the target content classification control is displayed in the specified display mode. In the embodiments of the present disclosure, by displaying the content classification control of the multimedia content classification on the specified display mode pop-up window, the user is interested in the multimedia content in the specified display mode, so that the user is guided to enable the specified display mode, improving the usage rate of the specified display mode.

### BRIEF DESCRIPTION OF THE DRAWINGS

The drawings, which are incorporated in and constitute a part of this specification, illustrate embodiments consistent with the present disclosure and are used to explain the principles of the present disclosure together with the description.

In order to more clearly illustrate the technical solutions in the embodiments of the present disclosure or the conventional art, the drawings to be used in the description of the embodiments or the conventional art will be briefly introduced in the following. Apparently, for those of ordinary skill in the art, other drawings may also be obtained from these drawings without making any creative efforts.
Figure 1 is a flowchart of a method for displaying a multimedia content according to an embodiment of the present disclosure;
Figure 2 is a schematic diagram of a youth mode pop-up window according to an embodiment of the present disclosure;
Figure 3 is a schematic diagram of a display page of a multimedia content in a youth mode according to an embodiment of the present disclosure;
Figure 4 is a diagram showing signaling interaction of a method for displaying a multimedia content according to an embodiment of the present disclosure;
Figure 5 is a schematic structural diagram of an apparatus for displaying a multimedia content according to an embodiment of the present disclosure; and
Figure 6 is a schematic structural diagram of a device for displaying a multimedia content according to an embodiment of the present disclosure.

### DETAILED DESCRIPTION OF EMBODIMENTS

In order to understand the above purpose, features and advantages of the present disclosure more clearly, the solutions of the present disclosure will be further described below. It should be noted that, in the case of no conflict, the embodiments of the present disclosure and the features thereof may be combined with each other.

In the following description, many specific details are described in order to fully understand the present disclosure, but the present disclosure may also be implemented in other ways than described here. Apparently, the embodiments in the description are only some, rather than all of the embodiments of the present disclosure.

At present, specified display modes in multimedia content software have low usage rate. The specified display mode pop-up window displays single content to users, which is not enough to guide the user to enable a specified display mode. That is one of the reasons for the low usage rate of specified display modes.

In view of this, a method for displaying a multimedia content is provided according to an embodiment of the present disclosure. First, a specified display mode pop-up window is displayed, where at least one content classification control is displayed on the specified display mode pop-up window, and the content classification control has a correspondence with a multimedia content classification. Then, in response to a trigger operation for a target content classification control in the at least one content classification control, a specified display mode is enabled, and a multimedia content classification corresponding to the target content classification control is displayed in the specified display mode. In the embodiment of the present disclosure, by displaying the content classification control of the multimedia content classification on the specified display mode pop-up window, the user is interested in the multimedia content in the specified display mode, so that the user is guided to enable the specified display mode, improving the usage rate of the specified display mode.

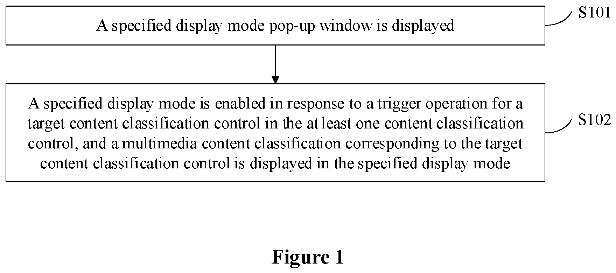

Based on this, a method for displaying a multimedia content is provided according to an embodiment of the present disclosure. Figure 1 is a flow chart of a method for displaying a multimedia content according to an embodiment of the present disclosure. Referring to Figure 1, the method includes the following steps S101 an S102.

In step S101, a specified display mode pop-up window is displayed.

At least one content classification control is displayed on the specified display mode pop-up window, and the content classification control has a correspondence with a multimedia content classification.

Embodiments of the present disclosure may be applied to a client. The client may be deployed on devices such as a desktop computer, a notebook computer, a smart phone, a tablet computer, a smart watch, and a wearable smart device.

In the embodiment of the present disclosure, a control for enabling a specified display mode is provided on the specified display mode pop-up window. By clicking the control, the specified display mode may be enabled, and the multimedia content may be displayed in the specified display mode.

In addition, the specified display mode pop-up window further displays content classification controls, and each content classification control has a correspondence with the multimedia content classification. The content classification control displayed on the specified display mode pop-up window is not only used to prompt the user of the multimedia content classification in the specified display mode, but also is used as an entrance of a specified display mode to enable the specified display mode.

The specified display mode in the embodiment of the present disclosure may include a picture browsing mode, a specified content learning mode, a youth display mode, and the like.

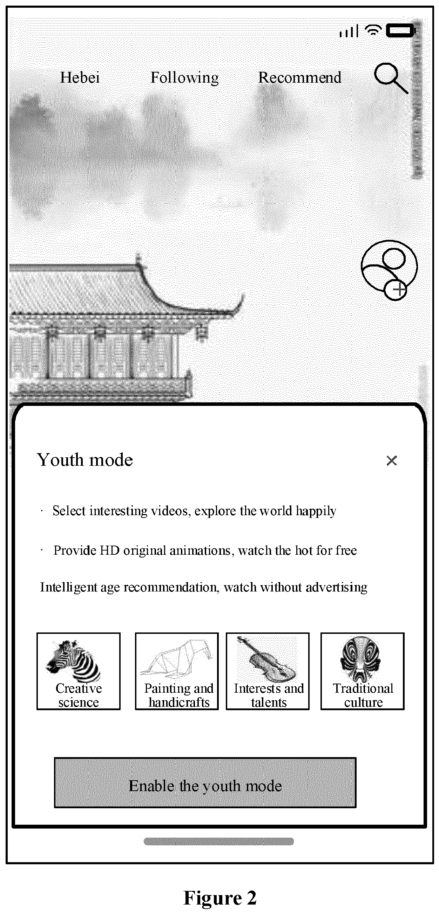

The youth display mode is taken as an example below. Figure 2 is a schematic diagram of a youth mode pop-up window according to an embodiment of the present disclosure. The youth mode pop-up window is displayed in the lower part of the current page. A description text, an animation, a picture, etc. of the youth mode are displayed on the youth mode pop-up window, to attract the user to enable the youth mode.

In addition, a content classification control corresponding to a currently logged-in user may further be displayed on the specified display mode pop-up window. Specifically, the content classification control may be determined based on historical behavior data of the currently logged-in user. In addition, a classification icon and a classification theme of a multimedia content classification corresponding to the content classification control are displayed on the content classification control.

In an embodiment, pop-up window display information is obtained in response to a login operation for a target application. The pop-up window display information includes a content classification control corresponding to the currently logged-in user. Then, the specified display mode pop-up window is displayed based on the pop-up window display information.

As shown in Figure 2, the youth mode pop-up window displays content classification controls such as "Creative science", "Painting and handicrafts", " Interests and talents" and "Traditional culture", which are used to prompt users of the multimedia content classification in the youth mode, and attract the users to enable the youth mode. A classification icon "Zebra" and a classification theme "Creative science" of a multimedia content classification corresponding to "Creative science" are displayed on the content classification control "Creative science".

In addition, if the number of content classification controls displayed on the specified display mode pop-up window exceeds the number that can be displayed at a time, the content classification controls on the specified display mode pop-up window may be set to be displayed in a slidable manner, to provide more information in the specified display mode for the user on the specified display mode pop-up window.

In practice, when a preset sliding operation on the specified display mode pop-up window is received, the content classification controls on the specified display mode pop-up window are displayed in a slidable manner to display hidden content classification controls on the specified display mode pop-up window. For example, the preset sliding operation may be an operation of sliding to the left or right. A content classification control "Popular stories" hidden on the right side of "traditional culture" in Figure 2 may be displayed on the specified display mode pop-up window through the operation of sliding to the right.

In an embodiment, when a login operation for a target application is received, the user identification of the currently logged-in user is sent to the server. The user identification may be a user nickname of the currently logged-in user, etc., which is used to uniquely identify the currently logged-in user. The server may determine the content classification control based on the historical behavior data corresponding to the user identification, and return pop-up display information carrying the content classification control to the client. Thus, the client can display a specified display mode pop-up window based on the pop-up window display information. The pop-up window display information may further include display elements such as a descriptive text, an image, and an animation of a specified display mode.

Since the content classification control displayed on the specified display mode pop-up window is determined based on the historical behavior data of the currently logged-in user, the content classification control may represent the content that the currently logged-in user is interested in. In the embodiment of the present disclosure, the content that the currently logged-in user is interested in is displayed on the specified display mode pop-up window. Thus, the user is guided to enable the specified display mode.

In step S102, a specified display mode is enabled in response to a trigger operation for a target content classification control in the at least one content classification control, and a multimedia content classification corresponding to the target content classification control is displayed in the specified display mode.

In an embodiment of the present disclosure, multiple content classification controls may be displayed on the specified display mode pop-up window. When a trigger operation for a target content classification control in the at least one content classification control is received, the specified display mode may be enabled, and the multimedia content classification corresponding to the target content classification control is displayed in the specified display mode.

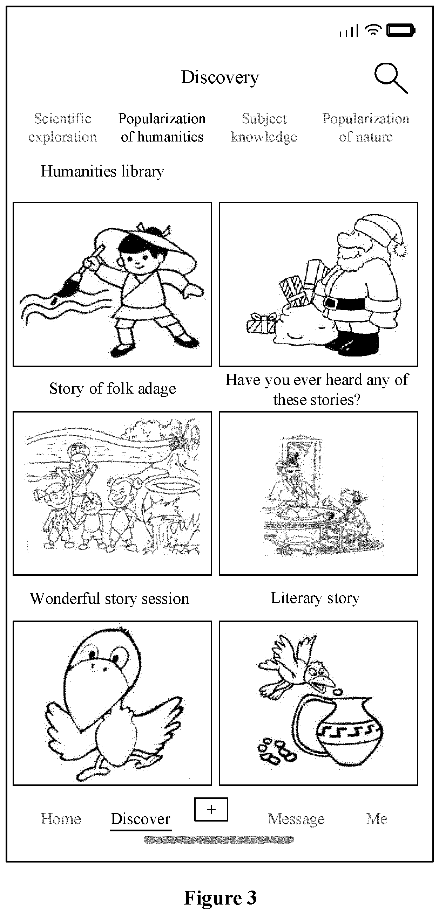

The youth mode is still taken as an example. Figure 3 is a schematic diagram of a display page of a multimedia content in the youth mode according to an embodiment of the present disclosure. As shown in Figure 3, once the youth mode is enabled, a discovery page is displayed first, and the multimedia content classification corresponding to the target content classification control is displayed on the discovery page. Specifically, the multimedia content classification displayed on the discovery page may be multimedia content displayed in a collection form.

As shown in Figure 3, in the case that the user clicks the content classification control "Popularization of humanities" displayed on the youth mode pop-up window, the discovery page is entered, and the multimedia content of the type of "Popularization of Humanities" is displayed on the discovery page.

In the embodiment of the present disclosure, since the user enables the specified display mode based on the interest of the user in the multimedia content classification corresponding to the target content classification control, the multimedia content classification corresponding to the target content classification control may be preferentially displayed in the case that the specified display mode is enabled, to improve usage experience of the user on the specified display mode.

In an embodiment, in the case of switching from the multimedia content display page to the preset multimedia content display page in a specified display mode, the multimedia content belonging to the multimedia content classification corresponding to the target content classification control is selected from recommended video streaming on a preset multimedia content display page. The preset multimedia content display page may be a home page.

Since the user enables the specified display mode based on the interest of the user in the multimedia content classification corresponding to the target content classification control, the multimedia content may be screened out from recommended video streaming based on the multimedia content classification that the user is interested in on a preset multimedia content display page in the specified display mode, to improve usage experience of the user on the specified display mode.

In the method for displaying the multimedia content according to the embodiments of the present disclosure, first, a specified display mode pop-up window is displayed, where the specified display mode pop-up window displays at least one content classification control, and the content classification control has a correspondence with the multimedia content classification; then, in response to a trigger operation for a target content classification control in the at least one content classification control, a specified display mode is enabled and a multimedia content classification corresponding to the target content classification control is displayed in the specified display mode. In the embodiment of the present disclosure, by displaying the content classification control of the multimedia content classification on the specified display mode pop-up window, the user is interested in the multimedia content in the specified display mode, so that the user is guided to enable the specified display mode, improving the usage rate of the specified display mode.

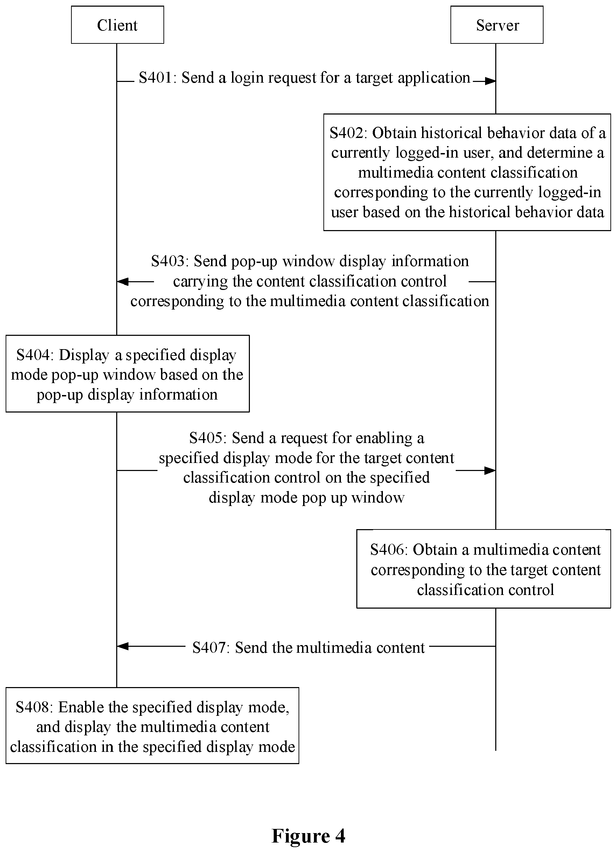

Based on the above embodiments, a method for displaying a multimedia content is further provided according to an embodiment of the present disclosure. Figure 4 is a diagram showing a signaling interaction of a method for displaying a multimedia content according to an embodiment of the present disclosure. Referring to Figure 4, the method includes the following steps S401 to S408.

In step S401, a client sends a login request for a target application to a server.

In step S402, after receiving the login request, the server obtains historical behavior data of a currently logged-in user, and determines a multimedia content classification corresponding to the currently logged-in user based on the historical behavior data.

The historical behavior data may include historical public contribution content and historical comment content, etc. The historical behavior data may represent a content which the currently logged-in user is interested in. By analyzing the historical behavior data of the currently logged-in user, the multimedia content classification corresponding to the currently logged-in user may be determined. For example, if the historical public contribution content of the currently logged-in user includes a large number of contributions related to "popularization of humanities", it means that the currently logged-in user is interested in multimedia content of the type "popularization of humanities". Thus, "popularization of humanities" may be determined as the multimedia content classification corresponding to the currently logged-in user. Generally, there may be multiple multimedia content classifications corresponding to the currently logged-in user.

It should be noted that the historical behavior data in the embodiments of the present disclosure may be used based on the authorization of the currently logged-in user.

In step S403, the server sends, to the client, pop-up window display information carrying the content classification control corresponding to the multimedia content classification.

Specifically, the pop-up window display information includes a content classification control, as well as display elements such as a descriptive text, an image, and an animation of a specified display mode.

In step S404, the client displays a specified display mode pop-up window based on the pop-up display information from the server.

In step S405, in a case of receiving the trigger operation for the target content classification control on the specified display mode pop-up window, the client sends to the server a request for enabling a specified display mode for the target content classification control.

In step S406, the server obtains a multimedia content corresponding to the target content classification control in a case of receiving the request for enabling the specified display mode.

In step S407, after obtaining the multimedia content, the server sends the multimedia content to the client.

In step S408, in a case of receiving the multimedia content from the server, the client enables the specified display mode, and displays the multimedia content classification in the specified display mode.

In the embodiments of the present disclosure, by displaying the content classification control of the multimedia content classification on the specified display mode pop-up window, the user is interested in the multimedia content in the specified display mode, so that the user is guided to enable the specified display mode, improving the usage rate of the specified display mode.

In addition, the content which the currently logged-in user is interested in is displayed preferentially in the case that the specified display mode is enabled, to improve the user experience of the specified display mode.

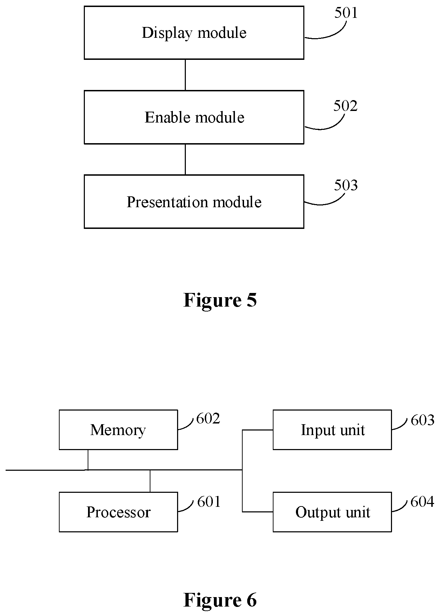

Based on the above method embodiments, an apparatus for displaying a multimedia content is further provided according to the present disclosure. Figure 5 is a schematic structural diagram of an apparatus for displaying a multimedia content according to an embodiment of the present disclosure. Referring to Figure 5, the apparatus includes: a display module 501, an enabling module 502, and a presentation module 503.

The display module 501 is configured to display a specified display mode pop-up window, wherein the specified display mode pop-up window displays at least one content classification control, and the content classification control has a correspondence with the multimedia content classification.

The enabling module 502 is configured to enable a specified display mode in response to a trigger operation for a target content classification control in the at least one content classification control.

The presentation module 503 is configured to display a multimedia content classification corresponding to the target content classification control in the specified display mode.

In an embodiment, the apparatus further includes: a playing module configured to play a multimedia content belonging to the multimedia content classification, in response to a trigger operation of switching from a current page to a preset multimedia content display page.

In an embodiment, the apparatus further includes: an obtaining module configured to obtain pop-up window display information in response to a login operation for a target application, where the pop-up window display information includes a content classification control corresponding to a currently logged-in user.

Correspondingly, the display module is further configured to display the specified display mode pop-up window based on the pop-up window display information.

In an embodiment, the pop-up window display information includes a content classification control determined based on historical behavior data of the currently logged-in user.

In an embodiment, the content classification control displays a classification icon and a classification theme of the multimedia content classification corresponding to the content classification control.

In an embodiment, the apparatus further includes: a sliding display module configured to display the at least one content classification control in a slidable manner, in response to a preset sliding operation for the at least one content classification control on the specified display mode pop-up window.

In the apparatus for displaying the multimedia content according to the embodiments of the present disclosure, first, a specified display mode pop-up window is displayed, where the specified display mode pop-up window displays at least one content classification control, and the content classification control has a correspondence with the multimedia content classification; then, in response to a trigger operation for a target content classification control in the at least one content classification control, a specified display mode is enabled and a multimedia content classification corresponding to the target content classification control is displayed in the specified display mode. In the embodiment of the present disclosure, by displaying the content classification control of the multimedia content classification on the specified display mode pop-up window, the user is interested in the multimedia content in the specified display mode, so that the user is guided to enable the specified display mode, improving the usage rate of the specified display mode.

In addition to the above method and apparatus, a computer-readable storage medium is further provided according to an embodiment of the present disclosure, which stores instructions. The instructions, when executed on a terminal device, cause the terminal device to perform the method for displaying the multimedia content described in the embodiments of the present disclosure.

A computer program product is further provided according to an embodiment of the present disclosure, which includes a computer program/instruction. The computer program/instruction, when executed by a processor, causes the processor to perform the method for displaying the multimedia content described in the embodiments of the present disclosure.

In addition, a device for displaying a multimedia content is further provided according to an embodiment of the present disclosure. As shown in Figure 6, the device may include: a processor 601, a memory 602, an input unit 603 and output unit 604. The number of the processor 601 in the device for displaying the multimedia content may be one or more. One processor is taken as an example in Figure 6. In some embodiments of the present disclosure, the processor 601, the memory 602, the input unit 603 and the output unit 604 may be connected through a bus or in other ways. The connection through a bus is taken as an example in Figure 6.

The memory 602 may be used to store software programs and modules, and the processor 601 executes various functional applications and data processing of the device for displaying a multimedia content by running the software programs and modules stored in the memory 602. The memory 602 may mainly include a program storage area and a data storage area, where the program storage area may store an operating system, an application required by at least one function, and the like. In addition, the memory 602 may include a high-speed random access memory, and may also include a non-volatile memory, such as at least one magnetic disk storage device, flash memory device, or other volatile solid-state storage devices. The input unit 603 may be used to receive inputted digital or character information, and generate signal input related to user settings and function control of the device for displaying a multimedia content.

Specifically, in this embodiment, the processor 601 may load the executable files corresponding to the processes of one or more applications into the memory 602 according to the instructions, and the processor 601 may run the applications stored in the memory 602, to realize various functions of the above device for displaying a multimedia content.

It should be noted that, relationship terms such as "first" and "second" herein are only used to distinguish one entity or operation from another entity or operation, and do not necessarily require or imply that there is such actual relationship or order exists between these entities or operations. Furthermore, the terms "comprises", "includes" or any other variation thereof intend to cover a non-exclusive inclusion such that a process, method, article, or apparatus comprising a set of elements includes not only those elements, but also includes other elements not expressly listed, and may also include inherent in such a process, method, article, or apparatus. Without further limitations, an element defined by the phrase "comprising a ..." does not exclude the presence of additional identical elements in the process, method, article or apparatus comprising the element.

Only specific embodiments of the present disclosure are described in the above, so that those skilled in the art can understand or implement the present disclosure. Various modifications to these embodiments will be readily apparent to those skilled in the art, and the general principles defined herein may be implemented in other embodiments without departing from the spirit or scope of the present disclosure. Therefore, the present disclosure will not be limited to the embodiments described herein, but is to be accorded the widest scope consistent with the principles and novel features disclosed herein.

## Claims

1. A method for displaying a multimedia content, comprising:
displaying a specified display mode pop-up window, wherein the specified display mode pop-up window displays at least one content classification control, and the content classification control has a correspondence with a multimedia content classification; and
enabling a specified display mode in response to a trigger operation for a target content classification control in the at least one content classification control, and displaying a multimedia content classification corresponding to the target content classification control in the specified display mode.

2. The method according to claim 1, further comprising:
playing a multimedia content belonging to the multimedia content classification, in response to a trigger operation of switching from a current page to a preset multimedia content display page.

3. The method according to claim 1, wherein before the displaying the specified display mode pop-up window, the method further comprises:
obtaining pop-up window display information in response to a login operation for a target application, wherein the pop-up window display information comprises a content classification control corresponding to a currently logged-in user, and
wherein the displaying the specified display mode pop-up window comprises:
displaying the specified display mode pop-up window based on the pop-up window display information.

4. The method according to claim 3, wherein the pop-up window display information comprises a content classification control determined based on historical behavior data of the currently logged-in user.

5. The method according to claim 3 or 4, wherein a classification icon and a classification theme of the multimedia content classification corresponding to the content classification control are displayed on the content classification control.

6. The method according to claim 3, wherein the obtaining the pop-up window display information in response to the login operation for the target application comprises:
sending a user identification of the currently logged-in user to a server, in response to receiving the login operation for the target application; and
receiving the pop-up window display information carrying the content classification control from the server, wherein the content classification control is determined by the server based on historical behavior data corresponding to the user identification.

7. The method according to claim 3, wherein the pop-up window display information further comprises one or more of a descriptive text, an image, and an animation of the specified display mode.

8. The method according to claim 1, further comprising:
displaying the at least one content classification control in a slidable manner, in response to a preset sliding operation for the at least one content classification control on the specified display mode pop-up window.

9. The method according to claim 1, wherein the specified display mode comprises one or more of a picture browsing mode, a specified content learning mode, and a youth display mode.

10. An apparatus for displaying a multimedia content, comprising:
a display module configured to display a specified display mode pop-up window; wherein the specified display mode pop-up window displays at least one content classification control, and the content classification control has a correspondence with a multimedia content classification;
an enabling module configured to enable a specified display mode in response to a trigger operation for a target content classification control in the at least one content classification control; and
a presentation module configured to display a multimedia content classification corresponding to the target content classification control in the specified display mode.

11. A computer-readable storage medium, comprising instructions stored thereon, wherein the instructions, when executed on a terminal device, cause the terminal device to perform the method according to any one of claims 1 to 9.

12. A device, comprising:
a memory;
a processor; and
a computer program stored on the memory and operable on the processor,
wherein the processor, when executing the computer program, performs the method according to any one of claims 1 to 9.

13. A computer program product, comprising a computer program/instruction, wherein the computer program/instruction, when executed by a processor, performs the method according to any one of claims 1 to 9.
